# EUROPEAN PATENT SPECIFICATION

(11) **EP 3 071 141 B1**
(45) Date of publication and mention of the grant of the patent: **04.03.2020**
(21) Application number: 14800076.3
(22) Date of filing: 20.11.2014
(51) Int. Cl.: A61C 8/00

(54) **DENTAL IMPLANT**
ZAHNIMPLANTAT
IMPLANT DENTAIRE

(30) Priority: 20.11.2013 LU 92312
(43) Date of publication of application: 28.09.2016
(73) Proprietor: Jade Finance S.A.R.L., 1870 Luxembourg (LU)
(72) Inventor: HORNBECK, Jacques, L-1870 Luxembourg (LU)
(74) Representative: Office Freylinger
(86) International application number: PCT/EP2014/075182
(87) International publication number: WO 2015/075137

(56) References cited:
- EP-A1- 1 269 932
- WO-A1-2004/002358
- DE-A1-102009 057 754
- US-B1- 6 244 867

## Description

### Technical field

The present invention generally relates to dental implants, particularly endosseous dental implants. The invention more particularly relates to abutments of such implants, which reduce the risk of infecting the gingiva in proximity of the dental implant.

### Background Art

Dental implants as well as dental abutments exist nowadays in a great variety of different shapes and materials. The shape of the dental implant is chosen amongst others according to the number of teeth, which are replaced, the thickness of the osseous material and the position of the tooth inside the oral cavity. In some cases only one tooth is replaced, in other cases multiple teeth or all the teeth are replaced.

Such a dental implant comprises multiple parts: an implant fixture, at least one abutment and the tooth crown or dental prosthesis. The implant fixture is substantially cylindrically shaped with a circular base and is inserted into the bone to act as an artificial root. The implant fixture is typically made of titanium or a titanium alloy and is inserted into an opening, which has been bored into the bone. Once inserted, the bone has to grow into grooves on the surface of the implant fixture to fix the implant in the desired position (osseointegration), before any pressure can be put onto the implant fixture.

After the healing process is finished, the at least one abutment is connected to the implant fixture. The abutment is usually made of a metallic material for hygienic reasons such as e.g. titanium and has an internal passageway with a screw passing through. The screw engages a thread inside the implant fixture to hold the abutments and the tooth crown or artificial prosthesis in place.

The dental implant described in the European patent application EP 1 269 932 A1 corresponds to a typical dental implant comprising multiple parts: an implant fixture, a first abutment, a second abutment with a tooth crown or a dental prosthesis.

The implant fixture fastens the dental implant to the bone of a patient. The implant fixture is cylindrically shaped with a circular base having a diameter based on the thickness of the available osseous material. The implant is typically self-tapping and it is screwed into a borehole of the patient's bone provided to be coaxial with the central axis of the implant. After the implant fixture has been screwed into the bone of the patient, the outer surface of the implant fixture is in direct contact with the bone. The implant fixture comprises an upper abutment connector for connecting the first abutment to the implant fixture in such a way that the first abutment does not rotate relative to the implant fixture.

The implant fixture has an internal thread in axial direction. The internal thread is coaxial with the central axis of the implant fixture for engaging a screw that fastens the first abutment and the second abutment to the implant fixture. Before the screw engages the implant fixture, the first abutment and the second abutment are inserted in axial direction, coaxial with the central axis of the implant, into the implant fixture. An implant fixture connector is arranged on the osseous side of the first abutment, while the upper abutment connector is arranged on the intraoral side of the implant fixture.

A further example of such an implant fixture connector and an upper abutment connector are disclosed in the European patent application EP 2 529 692. The implant fixture connector is a hexagon prism, preferably a regular hexagon prism with six outward flats, which engage the first abutment connector which has the negative shape of the implant fixture connector, with six inward flats. In assembled state the six outward flats are substantially in direct contact with the inward flats. According to the European patent application EP 2 529 692, the external surface of the first abutment is in assembled state partly in direct contact with the gingiva.

The first abutment has also a second abutment connector connecting with the first abutment connector of the second abutment in such a way that the first abutment does not rotate relative to the second abutment. The second abutment connector has six outward flats, which engage the six inward flats of the first abutment connector of the second abutment.

A screw engages the internal thread of the implant fixture such that the internal thread of the implant fixture is aligned with a first passageway through the first abutment and a second passageway through the second abutment. After the screw has been inserted through the first abutment and the second abutment into the internal thread of the implant fixture, the screw is fixed. As a result the first abutment and the second abutment cannot move relative to the implant fixture.

Even if the screw is tightly fixed and even if the contact surfaces of the abutments and the fixture are machined such that they engage accurately, there still are gaps where the contact surfaces engage. A gap is present between the first abutment and the implant fixture and a further gap is present between the first abutment and the second abutment.

US 6,244,867 B1 describes a multi-part abutment adapted for use with dental implants such as cylindrical-shaped endosseous dental implants; having an internal opening or passage with an internal, noncircular shape at the top, either internally or externally, includes part one that engages the opening or passage in, or projection at the top, of the implant at the distal end of part one, and fits into abutment part two, at the top end of part one. Part two has at its distal end a multi-sided cavity that interdigitates with a multi-sided periphery or other connector on part one so that part two can be placed in a plurality of positions over part one. At the top end of part two is a prosthesis-engaging or prosthesis-forming projection which may be at an angle to the longitudinal axis of the implant, or lie on the longitudinal axis of the implant. Internal passages inside the two abutment parts are collinear when joined to one another in their intended configuration, permitting the use of a single fastener to join the two abutment parts to one another and to the dental implant, with part two covering part one and forming a sealed margin with the top of the implant.

DE102009057754A1 describes a dental implant which comprises an implant screw with an external thread, an implant abutment and a tightening screw which can be screwed into the implant screw and by which the implant abutment is connectable or connected with the implant screw, wherein the implant screw rests against a contact surface of the implant abutment with a contact surface. To improve such dental implant, the implant screw and the implant abutment are made of a ceramic material at least in the region of their contact surfaces. The contact surface of the implant screw and the contact surface of the implant abutment are ground in against each other until they form a form fit so as to minimize the risk of bacterial growth at the contact surfaces.

WO2004/002358 discloses a spacer (3) with an associated adapter (4) which is designed to be fitted on an implant (1). The adapter comprises first and second portions (4b, 4c) designed to cooperate with the spacer and the implant, respectively, for securing the spacer on the implant. The adapter is completely enclosed by the spacer and the implant, and the first portion of the adapter can be designed with slits for forming resilient elements on said portion and/or with penetrating parts which, when the adapter and the spacer are joined together, are deformed as it penetrates into opposite parts in the spacer material. The spacer and the adapter can in this way be easily held together upon application to the implant and can be taken apart when completion work is performed on the spacer.

In the above described implants, the second abutment is pressed against the shoulder of the implant i.e. on a relatively small contact surface between the second abutment and the implant fixture. The mechanical forces of the screw and of the chewing are thus directly exerted on the implant fixture via a small contact surface which is situated at the top of the implant fixture.

Furthermore, as there are different types of implant fixtures and implant fixtures of different length, the implant fixture is sometimes inserted such that the intraoral surface of the implant fixture is level with the bone and sometimes such that the intraoral surface of the implant fixture is not level with the bone, but protrudes into the oral cavity. As a result, the exterior surface for some of the implant fixtures is not only in direct contact with the jawbone but it is partly also in direct contact with the gingiva.

There is a risk that bacteria accumulate in the gaps even if the gaps are microscopic. As a result, the gingiva in direct contact with the gaps may be become infected and in the worst case, the implant must be removed.

### Technical problem

It is an object of the present invention to provide a dental implant with a reduced risk of infecting the gingiva in contact therewith. This object is achieved by a dental implant as claimed in claim 1.

### General Description of the Invention

In order to overcome the above-mentioned problem, the present invention relates to a dental implant with a reduced risk of infecting the gingiva in direct contact with the dental implant.

The dental implant thus has an intraoral surface and comprises:
∘ An implant fixture which comprises an upper surface being an intraoral surface comprising:
   ∘ an internal thread, and
   ∘ an upper abutment connector,
∘ A first abutment comprising:
   ∘ an implant fixture connector connectable to said upper abutment connector,
   ∘ a second abutment connector, and
   ∘ a first passageway,
∘ A second abutment comprising:
   ∘ a first abutment connector connectable to said second abutment connector,
   ∘ a second passageway, wherein
   ∘ a screw is inserted through said first passageway and said second passageway into said internal thread such that said screw attaches said first abutment and said second abutment to said implant fixture.

In the assembled state said implant fixture is in contact with said second abutment, a horizontal contact surface comprising microscopic gaps is formed between said first and second abutment, said horizontal contact surface comprising microscopic gaps is situated at a distance d below said intraoral surface, there is only one vertical contact surface comprising microscopic gaps between the second abutment and the implant fixture and said vertical contact surface comprising microscopic gaps is substantially vertical. The intraoral surface of the dental implant is the upper surface of the implant fixture which is exposed to the oral cavity when the implant fixture is implanted in the jaw bone. The osseous surface of the implant fixture is in direct contact with the bone, such as e.g. the jawbone. The dental implant comprises an implant fixture, a first abutment and a second abutment connectable to the implant fixture. The implant fixture is connectable to a patient's bone. The implant fixture comprises an internal thread and an upper abutment connector. The first abutment comprises an implant fixture connector, which is connectable to the upper abutment connector of the implant fixture. The first abutment further comprises a second abutment connector and a first passageway. The second abutment comprises a first abutment connector, which is connectable to the second abutment connector of the first abutment. The second abutment also comprises a second passageway. The first abutment and the second abutment are attachable to the implant fixture by a screw, which is insertable through the first passageway and the second passageway into the internal thread of the implant fixture.

In its assembled state said implant fixture is in contact with said second abutment, and a substantially horizontal contact surface comprising microscopic gaps is formed between said first and second abutment and this gap is situated at a distance d below said intraoral surface.

In other words, the first abutment is hidden inside the second abutment and the implant fixture so that the horizontal contact surface comprising microscopic gaps between the first abutment and the implant fixture is not exposed to the gingiva.

As a consequence, also in the assembled state, a substantially vertical contact surface comprising microscopic gaps is formed between the second abutment and the implant fixture.

The horizontal contact surface comprising microscopic gaps between the first and the second abutment is not in contact with the gingiva since it is at a distance d below the intraoral surface of the implant fixture. The second abutment has thus no horizontal gap or contact surface with the implant fixture.

The fact that the horizontal contact surface comprising microscopic gaps between the first abutment and the second abutment is sunk into the implant fixture and not above the interoral surface as it is traditionally the case, allows to create an exposed gap, which has a reduced surface which is exposed to the gingiva. Indeed, since this gap is sunk in the implant fixture, the contact surface comprising microscopic gaps (12gap between the second abutment and the implant fixture is made substantially vertical or slightly inclined outwards, preferably in an angle of between 70° and 90°, more preferably in an angle of between 75° and 89° and most preferably in an angle of between 82° and 87° with regard to the central axis of the dental implant.

Such a substantially vertical contact surface comprising microscopic gaps is easier to close tightly and thus the risk of bacteria being able to colonize this gap is reduced. The risk of infecting the gingiva, which is in direct contact with the dental implant, is reduced since there is only one substantially vertical gap, which is exposed to the gingiva instead of one respectively two horizontal gaps. The dental implant is thus more hygienic.

Another advantage of the present dental implant is that the forces occurring when chewing are mostly transferred to the first abutment and not on the top surface of the implant fixture. The forces are thus transferred deeper into the implant fixture and to a larger contact surface between the first abutment and the implant fixture. Furthermore since the gap between the second abutment and the implant fixture is substantially vertical, the construction is more solid when submitted to horizontal forces during chewing. As the dental implant has an exposed gap, which is substantially perpendicular to a central axis of the internal thread, the pressure applied onto the first abutment and the second abutment is higher than the pressure applied onto a surface, which is oblique to the central axis.

Preferably, the contact surface between the second abutment and the implant fixture is conical to guarantee a tight fit. The exposed gap is thus reduced to an annular slit around the lower part of the second abutment
The gap formed between the first abutment and the second abutment is situated at a distance d below the intraoral surface. The distance d is preferably between 0.001 and 1 mm, more preferably between 0.01 and 1 mm, more preferably between 0.01 and 0.5 and most preferably between 0.01 and 0.3 mm.

The upper abutment connector of the implant fixture has advantageously a conical section and an interior surface having a downwardly inwardly tapered flat. The inwardly tapered flat is engageable with a conical section of an exterior surface of the internal fixture connector of the first abutment with downwardly inwardly tapered flats. In the context, downwardly specifies a direction from the intraoral side to the osseous side. Thanks to the conical profile, the first abutment is very securely attached to the implant fixture when assembled.

The first abutment can be made of titanium, Cobalt-chrome (a metal alloy of cobalt and chromium) or any other suitable material used in dentistry. As titanium or Cobalt-chrome can be machined more easily than a ceramic material, the fitting accuracy of the first abutment and the implant fixture is increased. The tolerances for the fitting accuracy are preferably in range between 7 to 10 µm. Furthermore, titanium or Cobalt-chrome is more ductile than a ceramic material, such as e.g. zirconium. As a result the first abutment can level out the any uneven surface between the first abutment and the implant fixture.

The implant fixture connector is preferably connectable to the upper abutment connector such that the first abutment does not rotate relative to the implant fixture. The first abutment connector is connectable to the second abutment connector in such a way that the second abutment does not rotate relative to the first abutment. As a result, the pressure applied by the screw onto the implants and the fixture can be reduced. This is especially useful when the implant concerns a single tooth which should obviously not rotate around its vertical axis. However when the implant is destined to be used to secure a bridge of two or more teeth, it may be useful that the implant allows a certain degree of rotation around the vertical axis so the bridge can be more easily fastened to the implant.

According to a preferred embodiment of the invention, the implant fixture connector is a first hexagonal prism with six outward flats and the upper abutment connector has a fixture opening with six inward flats. The fixture opening engages the first hexagonal prism in such a way that the first abutment does not rotate relative to the implant fixture in assembled state.

The first abutment connector is preferably a second hexagonal prism with six outward flats. The second abutment connector can have six inward flats, which engage the second hexagonal prism in such a way that the first abutment does not rotate relative to the second abutment.

According to a preferred embodiment of the invention, the first abutment comprises one or more clipping, clamping or gripping elements to connect to the second abutment. Thanks to the clipping, clamping or gripping elements, the first abutment may be detachably connected to the second abutment before being inserted into the implant fixture and before the screw is inserted into the first and second passageways. As a result it is more practical for the dentist to insert the first abutment and second abutment when they are connected to each other.

The first abutment may comprise an internal thread arranged in the first passageway. The internal thread can engage the external thread of the screw such that the first abutment is attached to the screw, before it is inserted into the implant fixture. As a result, the screw as well as the first abutment and the second abutment can be inserted more conveniently into the implant fixture. As the first abutment, the second abutment and, in particular, the screws are of a small size, they are difficult to assembled inside a limited space such as a patient's mouth. It is thus advantageous, to assemble the first abutment and the screw, before they are inserted into the implant fixture.

The second abutment preferably comprises an internal thread, which can be engaged by the external thread of the screw, additionally or alternatively to the internal thread of the first abutment. The screw can be partially or fully threaded, and preferably has a smaller diameter in the non-threaded section than in the threaded section.

Another advantage of the dental implant is that no glue is required to hold the second abutment in place.

Furthermore the emergence profile of the second abutment can be further adapted to represent a natural tooth. In comparison to the implant fixture, which often has a substantially circular base (or artificial root), the root of a natural tooth is often not circular. With the dental implant according to the invention, the second abutment can be shaped subgingivally to give the impression of a natural tooth. This does not only have esthetical advantages but also diminishes the risk of infections of the gingiva since the accumulation of dental plaque is less important.

In a preferred embodiment, the second abutment is a crown, an artificial tooth or a bridge comprising two or more artificial teeth or a dental prosthesis.

In a preferred embodiment, the second abutment is made of polyetheretherketone (PEEK) or zirconia, in particular yttria-stabilized zirconia (YSZ).

### Brief Description of the Drawings

Further details and advantages of the present invention will be apparent from the following detailed description of a not limiting embodiment with reference to the attached drawing, wherein:
Fig. 1 is a cross sectional view of a dental implant according to the invention.
Fig. 2 is an enlarged view of the connection between the first abutment and the second abutment and between the second abutment and the implant fixture.
Fig. 3 is a perspective view of a first abutment according to a preferred embodiment of the invention.
Fig. 4 is a perspective view of the first abutment and the first abutment and the second abutment assembled together
Fig. 5 is a perspective view of the implant fixture fastened to the bone of a patient with the gingiva.
Fig. 6 is a perspective view of the implant fixture fastened to the bone of a patient with the gingiva and the first and second abutment assembled together.
Fig. 7 is a perspective view of the implant fixture fastened to the bone of a patient and the first and second abutment assembled together, wherein the second abutment is a crown.

### Description of Preferred Embodiments

The present invention relates to a dental implant with a reduced infection risk of the gingiva in direct contact with the dental abutment.

The present dental implant reduces the risk of infecting the gingiva in direct contact with the dental implant, by rearranging the first abutment and the second abutment such that only one gap is in direct contact with the gingiva. As opposed to known dental implants, the gap between the second abutment and the implant fixture is substantially vertical (angle between 70° and 90°) whereas in the known dental implants the gap is substantially horizontal. Furthermore, as opposed to the prior art dental implants discussed above, the second abutment is not in contact with the intraoral surface of the dental implant.

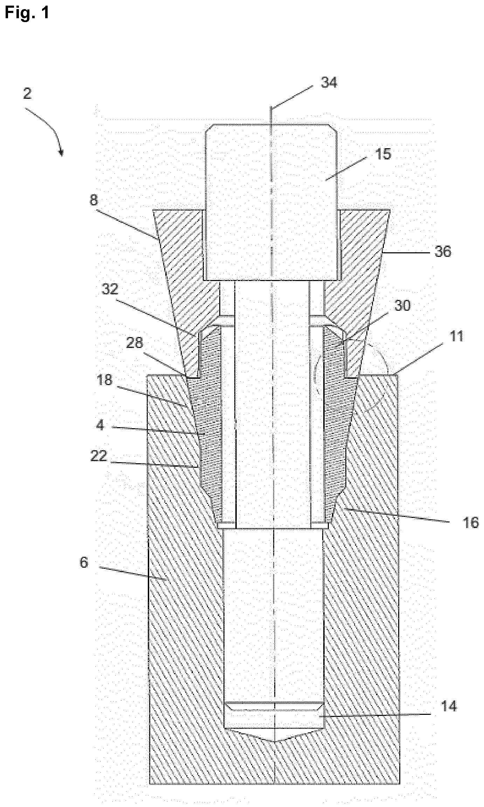

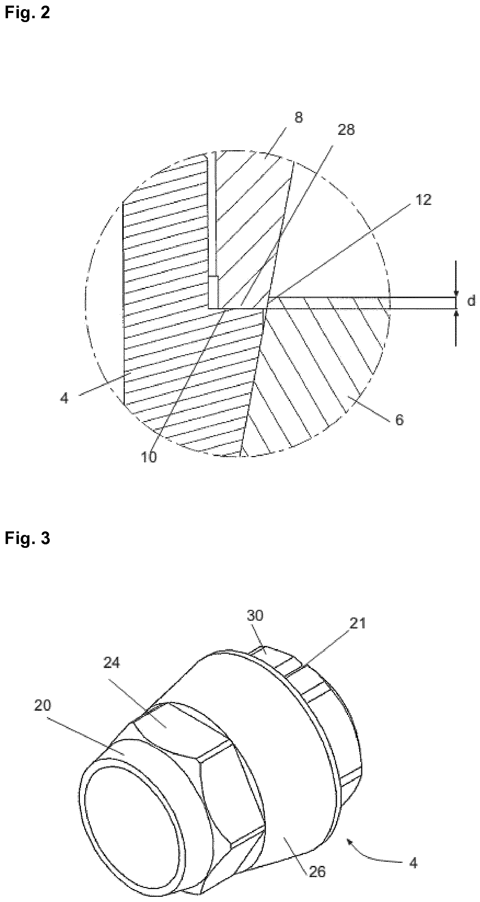

For a dental implant 2 in Fig. 1, the exterior surface of the first abutment 4 is not in contact with the gingiva in assembled state, the exterior surfaces of the first abutment 4 are only in direct contact with the implant fixture 6 and the second abutment 8. The first abutment 4 is thus entirely hidden from view on the one hand by the second abutment 8 and on the other hand by the implant fixture 6. In other words, the first abutment 4 "disappears" inside the implant fixture and its top is covered entirely by the second abutment 8. The first abutment 4 connects to the second abutment 8 in such a way that the connecting surfaces of the first abutment 4 and the second abutment 8 engage inside the implant fixture 6 below the intraoral surface 11 of the implant fixture 6. As a result, as shown in more detail in Fig. 2, there is a horizontal gap 10 between the first abutment 4 and the second abutment 8 which is only in direct contact with the internal surface of the implant fixture 6 and one substantially vertical gap 12 between the second abutment 8 and the implant fixture 6. It is only this substantially vertical gap 12 which is in direct contact with the gingiva. The area of contact (i.e. the horizontal gap 10) between the first abutment 4 and the second abutment 8 is located beneath the upper surface of the implant fixture 6 i.e. the intraoral surface 11 of the implant fixture 6 by distance d, which is preferably about 0,5 mm. As only the substantially vertical gap 12 is exposed to the gingiva the surface on which bacteria could grow the risk of infection is further diminished.

The implant fixture 6 has an axial borehole 14 with an internal thread for receiving a screw 15 in this particular case an M2 screw.

The implant fixture 6 has, on its inner side, a first conical section 16 and a second conical section 18. The first conical section 16 has a conical opening with a downwardly (in direction of the osseous material) inwardly tapered flat. In this particular case with a depth of approximately 0,52 mm, a small diameter of 2,26 mm, which increases to a bigger diameter of 2,46 mm for receiving the first abutment section 20 of the first abutment 4.

The second conical section 18 of the implant fixture has a second conical opening with a downwardly inwardly tapered flat. In this particular case with a depth of 1,37 mm and a bigger diameter of 3,31 mm decreasing to a smaller diameter of 2,82 mm.

The first abutment 4 has a first abutment section 20 (cf. Fig. 3), which corresponds to a downwardly inwardly tapered flat that engages the first conical section 16 of the implant fixture 6. The outer diameter in the thickest region of the first abutment 4 is between 2,20 mm and 3,80 mm. The thickest region of the first abutment is more proximate to the intraoral side that the thinnest region of the first abutment 4. The outer diameter of the thinnest surface corresponds approximately to the diameter of the screw insertable into the first and second abutment.

The second abutment section 26 of the first abutment 4 is downwardly inwardly tapered and engages the second conical section 18.

The first abutment 4 comprises one or more clipping, clamping or gripping elements 21 as a second abutment connector 30 (cf. Fig. 3) to connect to the second abutment 8. Thanks to these elements 21, the first abutment 4 is connectable to the second abutment 8 before being inserted into the implant fixture 6 and before the screw 15 is inserted into the first and second passageways. As a result it is more practical for the dentist to insert the first abutment 4 and second abutment 8, when they are attached to each other.

The upper abutment connector 22 is arranged in the implant fixture 6 between the first conical section 16 and the second conical section 18 to receive the implant fixture connector 24 of the first abutment 4 such that the first abutment 4 cannot rotate relative to the implant fixture 6. The upper abutment connector 22 is a regular hexagonal prism and has six inward flats of equal size, wherein the parallel opposing flats are spaced at distance of approximately 2,5 mm one from another.

The first abutment 4 comprises an annular, substantially horizontal, surface 28, which is arranged between the second abutment connector 30 and the second abutment section 26. The annular surface 28 comprises an inner diameter corresponding to approximately 2,82 mm and an outer diameter corresponding to approximately 3,31 mm and is parallel with the intraoral surface of the implant fixture 6.

The second abutment connector 30 has six outward flats, wherein the parallel opposing flats are spaced at a distance of approximately 2,49 mm one from the other. The second abutment connector 30 engages the first abutment connector 32 of the second abutment 8. The first abutment connector 32 has 6 inward flats, wherein the distance of the opposing sides is substantially superior to 2,49 mm.

The second abutment 8 has a second exterior surface 36 with an inwardly downwardly tapered flat. The second exterior surface 36 extends along the central axis 34 of the second passageway. This exterior surface 36 partially engages with the second conical section 18 of the implant fixture 6. Additionally, the second abutment 8 has an osseous side, which is pressed against the annular surface 28 of the first abutment 4. The second abutment 8 and the implant fixture are machined very accurately, with tolerances between 5 to 10 µm so that an extremely tight fit can be obtained.

The shapes of the different parts of the dental implant are chosen such that they snugly fit into each other. The first abutment fits on the one hand in the dental fixture and on the other hand in the second abutment. The second abutment fits over the first abutment and into the dental fixture. The exact shape of these components is not crucial, the parts must fit and they must not be able to turn around their vertical axis once they are fitted into / onto each other.

The dental implant as described herein offers the advantage that the second abutment does not "sit" on the implant fixture.

In the present case, the forces from the screw and from chewing are not transferred to the intraoral surface 11 of the implant fixture 6 but they are taken up by the two conical sections 16 and 18 of the implant fixture. The forces per mm² are thus lower and the stability of the implant is enhanced especially over the longer term.

The surfaces that take up these considerable forces are thus much larger as in the prior dental implants where the second abutment is "sitting" on the implant fixture. Indeed in these prior art dental implants, all the forces are taken up by a relatively small area of the intraoral surface of the implant fixture and the stress exerted par mm² is thus much larger. In such a construction, the contact area between the second abutment and the intraoral surface of the implant fixture is rather small. Indeed the thickness of the walls of implant fixture and of the walls of the second abutment is very limited. The forces applied to teeth when chewing may be very important and since these forces are applied in a large measure to the rim of the abutment and the rim of the implant fixture, these may break or become damaged.

Furthermore, if the contact surfaces between the second abutment and the implant fixture in these prior art dental implants are not absolutely level, interstices may be created where bacteria may grow and infect the gingiva.

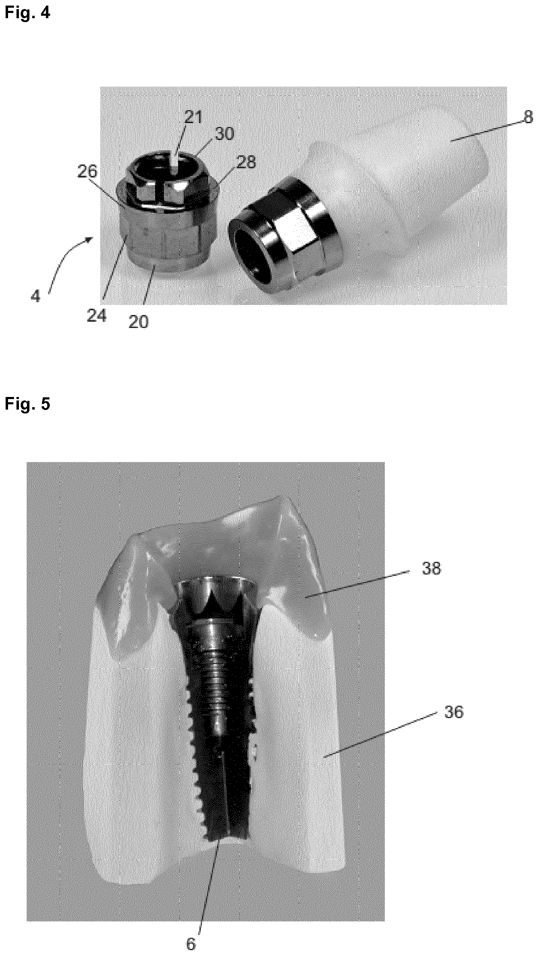

Turning now to Fig. 4, one can see on the left hand side a first abutment 4, with the first (conical) abutment section 20, the second (conical) abutment section 26 and the implant fixture connector 24 between these abutment sections 20, 26. The gripping elements 21 on the second abutment connector 30 can been above the annular surface 28 which is in contact with the second abutment 8 as shown on the right hand part of Fig. 4 showing the first and second abutment 4, 8 assembled together. The first abutment 4 is made of titanium or titanium alloy whereas the second abutment 8 is made PEEK or zirconium.

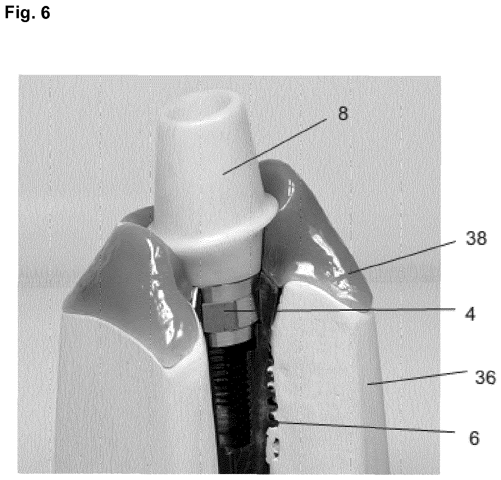

Fig 5. shows a model of an implant fixture 6 inserted in the jaw bone 36 with the gingiva 38 and Fig. 6 shows the first and second abutments 4, 8 inserted in the implant fixture 6. On this Fig. 6 one can see that the second abutment 8 is shaped so as to conform to the shape of the gingiva. The emergence profile of the dental implant 2 can thus be adapted to represent a natural tooth. With dental implant 2, the second abutment 8 can be shaped subgingivally to give the impression of a natural tooth. This is not possible with prior art dental implants, as the second abutment does not connect with the implant fixture. In consequence for prior art implants, the second abutment cannot be shaped in the subgingival section, since the first abutment is located between the second abutment and the implant fixture.

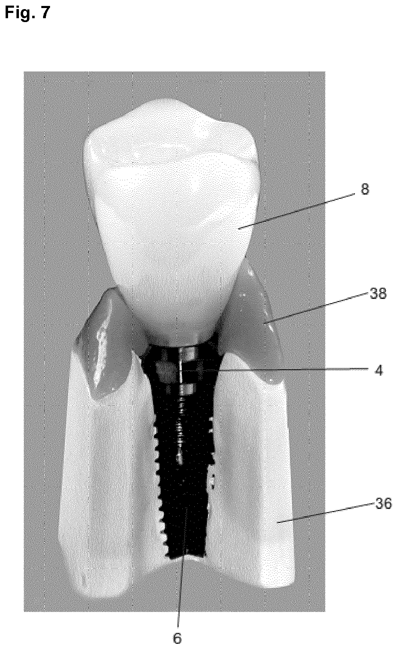

Fig. 7 corresponds to Fig. 6 except that in Fig. 7, the second abutment 8 is the tooth crown.

### Legend:

- 2: dental implant
- 4: first abutment
- 6: implant fixture
- 8: second abutment
- 10, 12: Gap / horizontal contact surface
- 11: intraoral surface
- 14: bore hole
- 15: screw
- 16: first conical section
- 18: second conical section
- 20: first abutment section
- 21: gripping elements
- 22: upper abutment connector
- 24: implant fixture connector
- 26: second abutment section
- 28: annular surface
- 30: second abutment connector
- 32: first abutment connector
- 34: central axis
- 36: Jawbone
- 38: Gingiva

## Claims

1. A dental implant (2) comprising:
∘ An implant fixture (6) which comprises an upper surface being an intraoral surface (11) comprising:
∘ an internal thread, and
∘ an upper abutment connector (22),
∘ A first abutment (4) comprising:
∘ an implant fixture connector (24) connectable to said upper abutment connector (22),
∘ a second abutment connector (30), and
∘ a first passageway,
∘ A second abutment (8) comprising:
∘ a first abutment connector (32) connectable to said second abutment connector (30),
∘ a second passageway, wherein
∘ a screw (15) is inserted through said first passageway and said second passageway into said internal thread such that said screw (15) attaches said first abutment (4) and said second abutment (8) to said implant fixture (6),
wherein in assembled state said implant fixture (6) is in contact with said second abutment (8), a horizontal contact surface comprising microscopic gaps (10) is formed between said first and second abutment (4, 8) and said horizontal contact surface comprising microscopic gaps (10) is situated at a distance d below said intraoral surface (11), **characterized in that** there is only one contact surface comprising microscopic gaps (12) between the second abutment (8) and the implant fixture (6) and **in that** said contact surface comprising microscopic gaps (12) is substantially vertical.

2. The dental implant according to claim 1, wherein said distance d is between 0.01 and 1 mm.

3. A dental implant according to any one of the preceding claims, wherein said gap between said first and second abutment (4, 8) is invisible when the dental implant is assembled.

4. A dental implant according to any one of the preceding claims, wherein said first abutment (4) is made of titanium.

5. A dental implant according to any one of the preceding claims, wherein said implant fixture connector (24) is connectable to said upper abutment connector (22) such that said first abutment (4) does not rotate relative to said implant fixture (6), and wherein said first abutment connector (32) is connectable to said second abutment connector (30) in such a way that said second abutment (8) does not rotate relative to said first abutment (4).

6. A dental implant according to any one of the preceding claims, wherein said implant fixture connector (24) is a first hexagonal prism with six outward flats and wherein said upper abutment connector (22) has six inward flats, which engage the first hexagonal prism in such a way that the first abutment (4) does not rotate relative to said implant fixture (6) in assembled state.

7. A dental implant according to any one of the preceding claims, wherein said first abutment connector (32) is a second hexagonal prism with six outward flats and wherein said second abutment connector (30) has six inward flats, which engage said second hexagonal prism in such a way that the first abutment (4) does not rotate relative to said second abutment (8).

8. A dental implant according to any one of the preceding claims, wherein the first abutment (4) comprises one or more clipping, clamping or gripping elements (21) to detachably connect it to the second abutment (8).

9. A dental implant according to any one of the preceding claims, wherein said horizontal contact surface comprising microscopic gaps (10) between the first and the second abutment (4, 8) is substantially perpendicular to the central axis of said internal thread.

## Patentansprüche

1. Ein Zahnimplantat (2), das Folgendes aufweist:
∘ Eine Implantatbefestigung (6), die eine Oberseite aufweist, bei der es sich um eine intraorale Fläche (11) handelt, die Folgendes aufweist:
∘ ein Innengewinde und
∘ ein oberes Abutment-Verbindungsstück (22),
∘ Ein erstes Abutment (4), das Folgendes aufweist:
∘ ein Implantatbefestigungs-Verbindungsstück (24), das mit dem oberen Abutment-Verbindungsstück (22) verbindbar ist,
∘ ein zweites Abutment-Verbindungsstück (30) und
∘ einen ersten Durchgang,
∘ Ein zweites Abutment (8), das Folgendes aufweist:
∘ ein erstes Abutment-Verbindungsstück (32), das mit dem zweiten Abutment-Verbindungsstück (30) verbindbar ist,
∘ einen zweiten Durchgang, wobei
∘ eine Schraube (15) durch den ersten Durchgang und den zweiten Durchgang in das Innengewinde einführbar ist, so dass die Schraube (15) das erste Abutment (4) und das zweite Abutment (8) an der Implantatbefestigung (6) befestigt,
wobei im zusammengebauten Zustand die Implantatbefestigung (6) mit dem zweiten Abutment (8) in Kontakt ist, wobei eine horizontale Kontaktfläche, die mikroskopische Spalten (10) aufweist, zwischen dem ersten und zweiten Abutment (4, 8) gebildet ist und sich die horizontale Kontaktfläche, die mikroskopische Spalten (10) aufweist, in einem Abstand d unterhalb der intraoralen Oberfläche (11) befindet, **dadurch gekennzeichnet, dass** es nur eine Kontaktfläche gibt, die mikroskopische Spalten (12) zwischen dem zweiten Abutment (8) und der Implantatbefestigung (6) aufweist und dadurch, dass die Kontaktfläche, die mikroskopische Spalten (12) aufweist, im Wesentlichen vertikal ist.

2. Zahnimplantat nach Anspruch 1, wobei der Abstand d zwischen 0,01 und 1 mm liegt.

3. Zahnimplantat nach einem der vorhergehenden Ansprüche, wobei der Spalt zwischen dem ersten und dem zweiten Abutment (4, 8) unsichtbar ist, wenn das Zahnimplantat zusammengebaut ist.

4. Zahnimplantat nach einem der vorhergehenden Ansprüche, wobei das erste Abutment (4) aus Titan besteht.

5. Zahnimplantat nach einem der vorhergehenden Ansprüche, wobei das Implantatbefestigungs-Verbindungsstück (24) mit dem oberen Abutment-Verbindungsstück (22) derart verbindbar ist, dass sich das erste Abutment (4) nicht relativ zu der Implantatbefestigung (6) dreht, und wobei das erste Abutment-Verbindungsstück (32) mit dem zweiten Abutment-Verbindungsstück (30) derart verbindbar ist, dass sich das zweite Abutment (8) nicht relativ zu dem ersten Abutment (4) dreht.

6. Zahnimplantat nach einem der vorhergehenden Ansprüche, wobei das Implantatbefestigungs-Verbindungsstück (24) ein erstes sechseckiges Prisma mit sechs nach außen gerichteten Abflachungen ist und wobei das obere Abutment-Verbindungsstück (22) sechs nach innen gerichtete Abflachungen aufweist, die so in das erste sechseckige Prisma eingreifen, dass sich das erste Abutment (4) im montierten Zustand nicht relativ zur Implantatbefestigung (6) dreht.

7. Zahnimplantat nach einem der vorhergehenden Ansprüche, wobei das erste Abutment-Verbindungsstück (32) ein zweites sechseckiges Prisma mit sechs nach außen gerichteten Abflachungen ist und wobei das zweite Abutment-Verbindungsstück (30) sechs nach innen gerichtete Abflachungen aufweist, die in das zweite sechseckige Prisma derart eingreifen, dass sich das erste Abutment (4) nicht relativ zu dem zweiten Abutment (8) dreht.

8. Zahnimplantat nach einem der vorhergehenden Ansprüche, wobei das erste Abutment (4) ein oder mehrere Clip-, Klemm- oder Greifelemente (21) aufweist, um es/sie lösbar mit dem zweiten Abutment (8) zu verbinden.

9. Zahnimplantat nach einem der vorhergehenden Ansprüche, wobei die horizontale Kontaktfläche, die mikroskopische Spalte (10) zwischen dem ersten und dem zweiten Abutment (4, 8) aufweist, im Wesentlichen senkrecht zur Mittelachse des Innengewindes ist.

## Revendications

1. Implant dentaire (2) comprenant :
∘ un élément de fixation d'implant (6) qui comprend une surface supérieure qui est une surface intrabuccale (11) comprenant :
∘ un filetage interne, et
∘ un raccord de butée supérieur (22),
∘ une première butée (4) comprenant :
∘ un raccord d'élément de fixation d'implant (24) pouvant se raccorder audit raccord de butée supérieur (22),
∘ un second raccord de butée (30), et
∘ un premier passage,
∘ une seconde butée (8) comprenant :
∘ un premier raccord de butée (32) pouvant se raccorder audit second raccord de butée (30),
∘ un second passage, dans lequel
∘ une vis (15) est insérée à travers ledit premier passage et ledit second passage dans ledit filetage interne de telle sorte que ladite vis (15) fixe ladite première butée (4) et ladite seconde butée (8) audit élément de fixation d'implant (6),
dans lequel, dans un état assemblé, ledit élément de fixation d'implant (6) est en contact avec ladite seconde butée (8), une surface de contact horizontale comprenant des écarts microscopiques (10) est formée entre lesdites première et seconde butées (4, 8) et ladite surface de contact horizontale comprenant des écarts microscopiques (10) est située à une distance d'en dessous de ladite surface intrabuccale (11), **caractérisé par le fait qu'**il n'existe qu'une surface de contact comprenant des écarts microscopiques (12) entre la seconde butée (8) et l'élément de fixation d'implant (6) et **par le fait que** ladite surface de contact comprenant des écarts microscopiques (12) est sensiblement verticale.

2. Implant dentaire selon la revendication 1, dans lequel ladite distance d est comprise entre 0,01 et 1 mm.

3. Implant dentaire selon l'une quelconque des revendications précédentes, dans lequel ledit écart entre lesdites première et seconde butées (4, 8) est invisible quand l'implant dentaire est assemblé.

4. Implant dentaire selon l'une quelconque des revendications précédentes, dans lequel ladite première butée (4) est constituée de titane.

5. Implant dentaire selon l'une quelconque des revendications précédentes, dans lequel ledit raccord d'élément de fixation d'implant (24) peut se raccorder audit raccord de butée supérieur (22) de telle sorte que ladite première butée (4) n'entre pas en rotation par rapport audit élément de fixation d'implant (6), et dans lequel ledit premier raccord de butée (32) peut se raccorder audit second raccord de butée (30) de telle sorte que ladite seconde butée (8) n'entre pas en rotation par rapport à ladite première butée (4).

6. Implant dentaire selon l'une quelconque des revendications précédentes, dans lequel ledit raccord d'élément de fixation d'implant (24) est un premier prisme hexagonal avec six pans extérieurs et dans lequel ledit raccord de butée supérieur (22) présente six pans intérieurs qui viennent en prise avec le premier prisme hexagonal de telle sorte que la première butée (4) n'entre pas en rotation par rapport audit élément de fixation d'implant (6) dans l'état assemblé.

7. Implant dentaire selon l'une quelconque des revendications précédentes, dans lequel ledit premier raccord de butée (32) est un second prisme hexagonal avec six pans extérieurs et dans lequel ledit second raccord de butée (30) présente six pans intérieurs qui viennent en prise avec ledit second prisme hexagonal de telle sorte que la première butée (4) n'entre pas en rotation par rapport à ladite seconde butée (8).

8. Implant dentaire selon l'une quelconque des revendications précédentes, dans lequel la première butée (4) comprend un ou plusieurs élément(s) d'attache, de serrage ou de retenue (21) pour la raccorder de façon amovible à la seconde butée (8).

9. Implant dentaire selon l'une quelconque des revendications précédentes, dans lequel ladite surface de contact horizontale comprenant des écarts microscopiques (10) entre les première et seconde butées (4, 8) est sensiblement perpendiculaire à l'axe central dudit filetage interne.
